# EUROPÄISCHE PATENTSCHRIFT

(11) **EP 3 268 165 B1**
(45) Veröffentlichungstag und Bekanntmachung des Hinweises auf die Patenterteilung: **04.11.2020**
(21) Anmeldenummer: 16711152.5
(22) Anmeldetag: 04.03.2016
(51) Int. Cl.: B23Q 1/00, B25B 1/10, B23Q 7/10, B25B 1/24, B23Q 7/14

(54) **AUTOMATIONSFÄHIGES SPANNMITTELSYSTEM**
CLAMPING MEANS SYSTEM CAPABLE OF AUTOMATION
SYSTÈME DE MOYENS DE SERRAGE AUTOMATISABLE

(30) Priorität: 12.03.2015 DE 102015103653
(43) Veröffentlichungstag der Anmeldung: 17.01.2018
(73) Patentinhaber: Lang Technik GmbH, 73271 Holzmaden (DE)
(72) Erfinder: LANG, Philipp, 73249 Wernau (DE)
(74) Vertreter: Rüger Abel Patentanwälte PartGmbB
(86) Internationale Anmeldenummer: PCT/EP2016/054637
(87) Internationale Veröffentlichungsnummer: WO 2016/142284

(56) Entgegenhaltungen:
- EP-A1- 0 117 557
- EP-A2- 0 742 081
- DE-A1-102007 005 994
- DE-A1-102007 006 078
- DE-A1-102009 011 672
- DE-C1- 4 116 104

## Beschreibung

Die Erfindung betrifft ein Spannmittelsystem, bestehend aus Spannstöcken und mindestens einem Transportwagen zur Werkstückhandhabung.

Aus der DE 101 55 077 B4 ist eine Spanneinrichtung zum wiederholgenauen Spannen von Werkstücken in einer Bearbeitungsmaschine bekannt. Die Spanneinrichtung weist eine Bezugsebenenplatte auf, an deren Unterseite Kupplungsmittel in Gestalt von mehreren Spann- und Positionierbolzen angeordnet sind. Diese erstrecken sich parallel zueinander von einer ebenen Grundfläche der Spannplatte weg. Die Spannpositionierbolzen werden in gespanntem Zustand von Spannöffnungen einer Bezugsebenenplatte aufgenommen, wobei in den Öffnungen Spannmittel angeordnet sind, die an den Spannbolzen angreifen.

Die Spanneinrichtung kann von Hand in eine Maschine eingeführt und aus dieser herausgenommen werden.

Spanneinrichtungen der genannten Art können in einer Puffereinrichtung gemäß DE 10 2007 005 994 B4 bereitgehalten werden. Eine Handlingeinrichtung kann beispielsweise mittels einer Gabel einzelne Werkstückträger aus der Puffereinrichtung entnehmen und an eine Bearbeitungsmaschine übergeben. Die Handlingeinrichtung ersetzt in diesem Fall eine mit dem Beschicken der Maschine betraute Arbeitskraft. Allerdings ist dafür eine weitgehende Mechanisierung des gesamten Fertigungsablaufs erforderlich.

Die DE 10 2007 006 078 A1 beschreibt einen Spannstock mit zwei linear verschiebbar geführten und aufeinander zu spannbaren Backen. An der Unterseite einer scheibenförmigen Grundplatte weist der Spannstock ein Maschinenkupplungssystem zur Aufnahme in einer Bearbeitungsmaschine auf. An zwei um 180° versetzten Stelle ist der Rand der Scheibe mit zwei zueinander parallelen Nuten versehen. Die DE 41 16 104 C1 offenbart ein Werkstückmagazin für Paletten mit einer Reihe von Bolzenpaaren, wobei die Paletten eine Lageraufnahmekontur und eine Greiferaufnahmekontur aufweisen und die Lageraufnahmekontur der Palette in ein Bolzen des Magazins geschoben werden kann.

Es ist Aufgabe der Erfindung, ein flexibleres und gleichzeitig hoch effizientes System zur Werkstückhandhabung anzugeben.

Die Lösung dieser Aufgabe wird mit dem Spannmittelsystem nach Anspruch 1 ermöglicht.

Der erfindungsgemäße Spannmittelsystem umfasst einen Spannstock, der wenigstens zwei Werkstückspannbacken zum Fixieren eines Werkstücks aufweist. Die Spannbacken können dazu glatte oder profilierte ebene oder gekrümmte Spannflächen aufweisen, um an glatten oder vorprofilierten Werkstückflächen reib- und/oder formschlüssige Anlage zu finden. Zum Bewegen mindestens eines Spannbackens oder vorzugsweise gegenläufigen Bewegen beider Spannbacken, können mechanische Mittel, wie beispielsweise Spindeln oder dergleichen, verwendet werden. Die Spannbacken sind an einem Grundkörper des Spannstocks gehalten, wobei der Grundkörper eine unterbrechungsfreie oder auch durch Öffnungen unterbrochene Grundfläche mit einem daran angeordneten Maschinenkupplungssystem aufweist.

Das Maschinenkupplungssystem dient zur positionsgenauen Aufnahme des Spannstocks in einer Werkzeugmaschine. Das Maschinenkupplungssystem kann insbesondere nach der DE 101 55 077 A1 ausgebildet sein. Dazu können an der Grundfläche des Spannstocks vorzugsweise drei oder mehrere Spann- und Positionierbolzen vorgesehen sein, die sich von der Grundfläche weg und parallel zueinander erstrecken. In der Nähe des Endes jedes Spann- und Positionierbolzens kann eine vorzugsweise trapezförmig ausgebildete Nut angeordnet sein, die jeweils mit einer maschinenseitig vorgesehenen Festzieheinrichtung zusammenwirkt. Diese ist dazu eingerichtet, die Positionier- und Spannbolzen voneinander weg zu drängen und dabei eine Axialkraft in sie einzuleiten, um die Grundfläche des Spannstocks gegen eine entsprechende Spannfläche der Werkzeugmaschine zu ziehen.

Außerhalb der Grundfläche des Spannstocks weist der Grundkörper an einem ersten Ort eine Lageraufnahmekontur auf, die sich von einem Ende des Spannstocks ausgehend über zwei voneinander weg weisende parallel zueinander orientierte Flanken desselben erstrecken kann. Mittels der Lageraufnahmekontur ist der Spannstock an einer Lagerkontur einer Lagereinrichtung in definierter Position aufnehmbar. Die Lagereinrichtung kann dazu entsprechende Aufnahmemittel, wie beispielsweise Bolzen oder dergleichen, aufweisen, die die Lagerkontur bilden. Der Spannstock kann mit seiner Lageraufnahmekontur mit geringem Spiel in die Lagerkontur eingefügt werden.

Gegenüberliegend weist der Spannstock an einem zweiten Ort eine Greiferkontur auf. Diese kann sich von einem zweiten stirnseitigen Ende über die Flanken desselben erstrecken. Das zweite Ende (und somit der zweite Ort) liegt dem ersten Ende (und somit dem ersten Ort) des Spannstocks gegenüber und wird wie dieses jeweils von einem Endbereich des Grundkörpers gebildet. Es schließt jeweils mit einer Seitenfläche ab. Die beiden Orte sind vorzugsweise voneinander beabstandet und außerhalb der Grundfläche angeordnet.

Die Greiferkontur kann durch Greifernuten gebildet sein. Vorzugsweise ist die Greiferkontur von der Lagerkontur räumlich getrennt. Weiter sind die Lagerkontur und die Greiferkontur vorzugsweise unterschiedlich ausgebildet. Dadurch kann ein manuelles Fehlpositionieren der Spannstöcke auf dem Wagen, insbesondere ein Verwechseln von Greiferkontur und Lagerkontur vermieden werden.

Die Greiferkontur kann mit der Lageraufnahmekontur übereinstimmen oder auch von dieser abweichend ausgebildet sein. Werden die Greiferkontur und die Lagerkontur jeweils durch Nuten gebildet, können diese untereinander unverbunden oder auch als entlang der Flanken durchgehende Nuten ausgebildet sein. Wenn der Spannstock auf der Lagerkontur sitzt und dort vermittels Schwerkraft gehalten ist, weist die Greiferkontur vorzugsweise nach oben.

Die Lagereinrichtungen und die Lageraufnahmekontur bilden eine spielbehaftete Linearführung, so dass der Spannstock in einer nach oben gerichteten linearen Abzugsbewegung von der Lagereinrichtung abgenommen und durch eine lineare Absenkbewegung mit der Lagereinrichtung in Verbindung und somit in Speicherposition gebracht werden kann. Als Lagereinrichtung kann jeweils ein Paar Kegelbolzen oder auch ein Paar Zylinderbolzen dienen, die von einer Auflagefläche parallel zueinander aufragen und auf die der Spannstock mit seiner Lagerkontur, z.B. Nuten, aufgesteckt wird.

Der Spannstock ist in seiner Speicherposition von einem mechanischen Greifer erfassbar und kann somit von der Lagereinrichtung abgenommen und in eine Maschine überführt werden. Umgekehrt kann ein mit einem bearbeiteten Werkstück versehener Spannstock mittels des Greifers aus der Maschine (oder einer sonstigen Quelle) entnommen und auf der Lagerkontur einer Lagereinrichtung positionsrichtig abgesetzt werden. Die Greiferkontur ist vorzugsweise zur Formschlüssigen Ankopplung eines Greifers eingerichtet. Dazu kann die Greiferkontur Nuten umfassen, in die Greiferfinger fassen, so dass ein Moment, hervorgerufen durch die außerhalb des Greifers angreifende Gewichtskraft des Spannstocks und des Werkstücks, sicher vom Spannstock auf den Greifer übertragen wird. Insbesondere geht der Kraftvektor der Gewichtskraft ausgehend vom Schwerpunkt der Gesamtanordnung aus Spannstock und Werkstück, wenn der Spannstock mit horizontal gerichteter Grundfläche gehalten wird, nicht durch den Greifer. Mit anderen Worten, der Spannstock ist außermittig gehalten.

Der erfindungsgemäße Spannstock weist drei verschiedene, voneinander räumlich getrennte Anschlüsse, nämlich ein Maschinenkupplungssystem, eine Lageraufnahmekontur und einer Greiferkontur auf, die jeweils an voneinander verschiedenen Stellen des Spannstocks, insbesondere seines Grundkörpers, angeordnet sind und spezifische Aufgaben erfüllen. Die (in obigem Sinne ebenfalls außermittige) Lageraufnahmekontur dient ausschließlich der Lagerung des Spannstocks und des Transports gemeinsam mit der Lagereinrichtung. Die (außermittige) Greiferaufnahmekontur dient ausschließlich der Ankopplung des Spannstocks an den Greifer und somit dem Handling. Das (zentrale) Maschinenkupplungssystem dient ausschließlich der Positionierung und Fixierung des Spannstocks in der Bearbeitungsmaschine. Es wird nicht anderweitig genutzt, wodurch Verschmutzung, Abnutzung und Beschädigung, die zu Fehlpositionierungen führen könnten, vermieden werden.

Dieses Konzept und das darauf basierende erfindungsgemäße Spannmittelsystem ermöglichen eine automatisierte Handhabung des Spannstocks ohne Kompromisse hinsichtlich Spann- und Positioniergenauigkeit in der Werkzeugmaschine. Insbesondere wird das Maschinenkupplungssystem weder zum Lagern des Spannstocks noch zum Transportieren desselben mittels Greifer, Gleitschienen oder dergleichen benutzt. Damit können Handhabungs- und Positioniervorgänge ganz unterschiedlicher Genauigkeitsgrade (mikrometergenaue Positionierung durch das Maschinenkupplungssystem, millimetergenaue Positionierung durch die Lageraufnahmekontur, Zehntelmillimetergenaue Positionierung durch die Greiferkontur) erbracht werden, ohne dass durch die verschiedenen Grade der Genauigkeit und Robustheit bei der Behandlung Schäden oder Fehlpositionierungen auftreten würden.

Die Lageraufnahmekontur kann beispielsweise durch zwei Nuten gebildet werden, die sich parallel zueinander entlang der beiden Flanken des Spannstocks erstrecken. Die beiden Nuten können eine Länge von mehreren Zentimetern aufweisen und sind bezüglich einer Mittelebene des Spannstocks vorzugsweise spiegelsymmetrisch. Sie können einen Dreiecksquerschnitt, einen Trapezquerschnitt oder auch einen Rundquerschnitt aufweisen. Vorzugsweise weist die Nut wenigstens einen Abschnitt mit sich entlang ihrer Längserstreckung nicht verändernden Querschnitt auf. Außerdem kann die Nut, insbesondere an ihrem Ende, einen sich erweiternden oder verengenden Abschnitt aufweisen.

Gleiches gilt hinsichtlich Nutquerschnitt und Nutanordnung für die Greiferkontur. Dort können am Nutende angeordnete erweiterte oder vertiefte Nutbereiche als Formschlussstruktur für eine Greiferzange dienen, um Greifer und Spannstock mit einer Genauigkeit zueinander zu positionieren, die ausreicht um das Maschinenkupplungssystem des Spannstocks sicher mit der zugeordneten Struktur der Werkzeugmaschine in Eingriff zu bringen.

Zu dem erfindungsgemäßen Spannmittelsystem gehören mehrere Spannstöcke nach einer der oben diskutierten Ausführungsform sowie mindestens eine Spannstocklagereinrichtung in Gestalt eines oder mehrerer Transportwagen, an dessen (deren) Oberseite(n) mehrere Spannstockaufnahmen angeordnet sind, die Lagerkonturen bilden. Alle Lagerkonturen sind gleich orientiert und zur Aufnahme von Spannstöcken gleicher Größe eingerichtet. Sie sind dabei dazu eingerichtet, die Spannstöcke mit nach oben gerichteter Greiferkontur und nach unten orientierter Lageraufnahmekontur aufzunehmen. Die Abstände zwischen den einzelnen Spannstockaufnahmen (Lagerkonturen) sind vorzugsweise derart bemessen, dass mit Werkstücken versehene Spannstöcke in die Spannstockaufnahmen passen, wobei vorzugsweise alle Werkstücke gleich orientiert sind. Es können aber die Lagerkonturen auch bezüglich einer Vertikalachse unterschiedlich orientiert sein, so dass die Werkstücke in unterschiedliche Horizontalrichtungen weisen. Dadurch lässt sich bei komplizierten, z.B. stufenförmigen Werkstücken der Platzbedarf der Werkstücke minimieren.

Die Lagerkonturen können fest oder umpositionierbar, jedenfalls vorzugsweise in einem quadratischen oder rechteckigen Raster angeordnet sein. Das Raster kann in seiner Größe auf die Größe von den Spannstöcken aufzunehmenden Werkstücke abgestimmt sein. In Lagerposition ragen die Werkstücke von einem Spannstock weg ungefähr horizontal zu der Grundfläche des davor liegenden Spannstocks. Weiter ist es möglich, auf einem Wagen Lagereinrichtungen für Spannstöcke unterschiedlicher Größe anzuordnen. Auch kann das Spannsystem verschieden große, insbesondere verschieden lange Spannstöcke mit gleichen Lagerkonturen und/oder gleichen Greiferkonturen aufweisen. Die Länge eines Spannstocks wird in Bewegungsrichtung seiner Klemmbacken gemessen. Auf einem Wagen können Spannstöcke mit gleichen oder mit unterschiedlichen Werkstücken angeordnet sein. Die Spannstöcke können davon unabhängig gleiche oder unterschiedlicher Längen aufweisen.

Ein solcher Wagen mit Spannstocklagereinrichtung kann von Hand mit werkstücktragenden Spannstöcken bestückt und zur späteren Abarbeitung eines Bearbeitungsauftrags bereitgestellt werden. Zur Abarbeitung des Bearbeitungsauftrags ein oder mehrere solcher Wagen lediglich in den Zugangsbereich eines Greifroboters gefahren, der dann die Spannstöcke nacheinander der Bearbeitung in einer Bearbeitungsmaschine zuführt und danach die Spannstöcke mit bearbeitetem Werkstück wieder auf den Spannstockaufnahmen des Transportwagens ablegt. Es kann dazu vorgesehen sein, den Wagen in eine vorgegebene Parkposition zu überführen, so dass der Greifroboter die Spannstöcke blind greifen kann. Es kann aber auch ein Positionserfassungssystem vorgesehen sein, mit dem der Greifroboter die Position des Wagens und/oder der Spannstöcke erfasst, um die Spannstöcke positionsangepasst zu greifen und abzulegen.

Die von dem erfindungsgemäßen Spannmittelsystem ermöglichte Arbeitsweise ist gleichermaßen flexibel und hochautomatisiert. Bedienpersonen haben parallel Zugriff auf alle Spannstockaufnahmen wobei der Greifroboter und die Werkzeugmaschine den Fertigungsauftrag hingegen seriell abarbeiten können. Darüber hinaus hat der Greifroboter wahlfreien Parallelzugriff auf alle Spannstöcke und somit alle Werkstücke. Der Greifroboter kann die Werkstücke einer Bearbeitungsmaschine oder nacheinander auch mehreren Bearbeitungsmaschinen zuführen und die Spannstöcke mit bearbeiteten Werkstücken auf dem gleichen Wagen oder anderen Wagen in gleicher oder unterschiedlicher Position ablegen. Auch können die Spannstöcke in oder an Bearbeitungsmaschinenzwischenabgelegt werden, wenn an dazu vorgesehenen Stellen Lagereinrichtungen mit Lagerkonturen vorgesehen sind.

Das vorgestellte Konzept der Gestaltung von Spannstöcken lässt sich auch an vorhandenem Spannstockbestand umsetzen. Dazu können die Lageraufnahmekontur und die Greiferkontur, gegebenenfalls unter Bereitstellung entsprechender Bearbeitungsdaten, durch den Spannstockhersteller kundenseitig an bislang nicht mit solchen Konturen ausgerüsteten Spannstöcken angebracht werden. Sind die Greiferkontur und die Lageraufnahmekontur einfache Nuten, ist dies durch eine kundenseitig durchzuführende Fräsbearbeitung möglich.

Weitere Einzelheiten vorteilhafter Ausführungsformen der Erfindung sind Gegenstand der Zeichnung, der zugehörigen Beschreibung oder von Ansprüchen. Es zeigen:
Figur 1 einen erfindungsgemäßen Spannstock, in schematisierter Seitenansicht,
Figur 2 eine Gruppe von mit Werkstücken versehenen Spannstöcken auf einem Lager,
Figur 3 einen Transportwagen mit einem Spannstocklager in einer ersten Ausführungsform, in Perspektivdarstellung,
Figur 4 eine Transportwagen mit einer abgewandelten Ausführungsform eines Spannstocklagers,
Figur 5 das Spannstocklager ach Figur 4, in ausschnittsweiser perspektivischer Darstellung und
Figur 6 den Spannstock auf den Spannstocklager und zugeordnete Greifer.

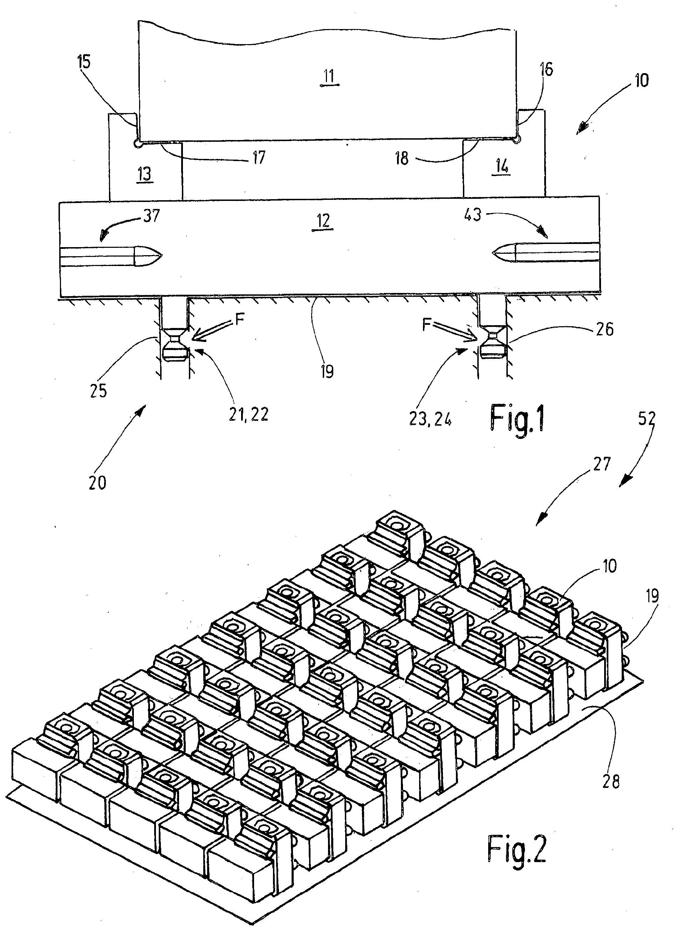

In Figur 1 ist ein Spannstock 10 schematisch veranschaulicht, der ein Werkzeug 11 zur Bearbeitung in einer nicht veranschaulichten Werkzeugmaschine bereithält. Zu dem Spannstock 10 gehört ein Grundkörper 12, an dem wenigstens zwei Spannbacken 13, 14 vorgesehen sind, die dazu dienen, das Werkstück 11 zwischen einander zu halten. Von den Spannbacken 13, 14 ist wenigstens einer an dem Grundkörper 12 zu dem anderen Spannbacken hin und von diesem weg beweglich gehalten. Bei der bevorzugten Ausführungsform sind beide Spannbacken 13, 14 aufeinander zu und voneinander weg beweglich. Eine nicht weiter dargestellte Schraubspindel oder ein sonstiges Spannmittel dient dabei zum Bewegen und Festziehen der Spannbacken 13, 14 wie auch zum Lösen derselben.

Die Spannbacken 13, 14 können zum Spannen des Werkstücks 11 entsprechende Druckflächen 15, 16 aufweisen, die eben ausgebildet und parallel zueinander orientiert sein können. Außerdem können die Spannbacken 13, 14 Auflageflächen 17, 18 aufweisen, die in einer gemeinsamen Ebene liegen, um das Werkstück 11 zu positionieren. Die Druckflächen 15, 16 können auch mit einer Profilierung versehen sein, die in eine vorgegebene Profilierung des Werkstücks 11 passt oder eine solche erzeugt.

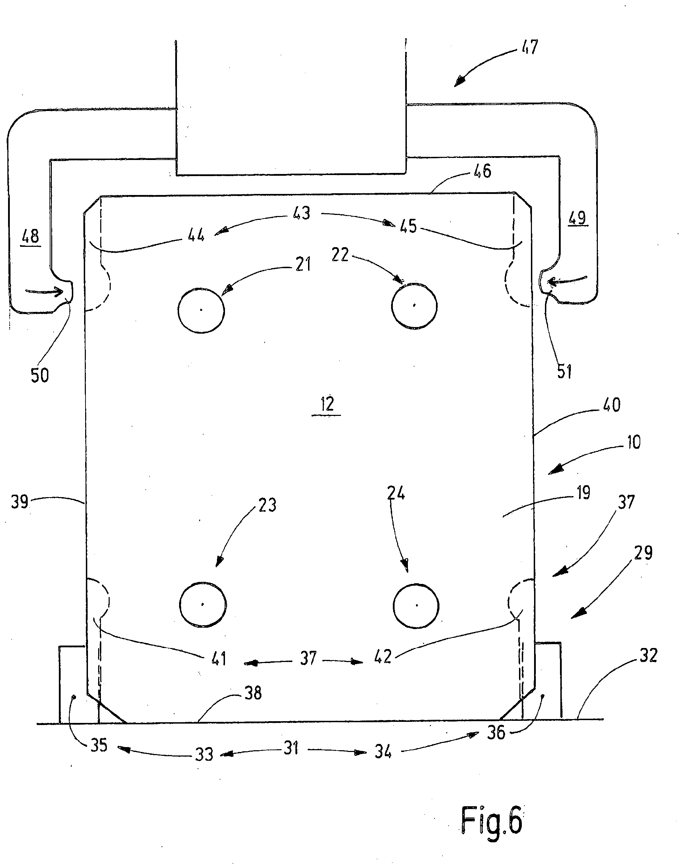

Der Spannstock 10 ist zum positionsgenauen Einsetzen in eine Werkzeugmaschine vorgesehen. Dazu weist der Grundkörper 12 an seiner Grundfläche 19 ein Maschinenkupplungssystem 20 auf, zu dem mehrere, zum Beispiel vier Spann- und Positionierbolzen 21 bis 24 (siehe auch Figur 6) gehören. Die Spann- und Positionierbolzen 21 bis 24 weisen eine zylindrische Grundform auf und erstrecken sich rechtwinklig von der Grundfläche 19 weg. Sie sind parallel zueinander orientiert und beispielsweise an den Ecken eines Rechtecks oder Quadrats angeordnet. Jeder Spann- und Positionierbolzen 21 bis 24 weist eine ringsum laufende Trapeznut auf, die von einer maschinenseitigen Festzieheinrichtung genutzt wird, um den jeweiligen Spann- und Positionierbolzen 21 bis 24 mit einer axialen von der Grundfläche 19 weg gerichteten Zugkraft zu beaufschlagen, um die Grundfläche 19 gegen eine Positionierfläche der Werkzeugmaschine festzuspannen. Zugleich dient eine solche Festzieheinrichtung dazu, die Spann- und Positionierbolzen 21 bis 24 so radial nach außen voneinander weg zu drängen, dass sich die von den Trapeznuten freigestellten unteren kopfartigen Enden der Spann- und Positionierbolzen 21 - 24 an entsprechende Bezugsflächen 25, 26 in den Aufnahmebohrungen der Bearbeitungsmaschine zu drücken. Die entsprechenden Spannkräfte F und Bezugsflächen 25, 26 der Bearbeitungsmaschine sind in Figur 1 schematisch veranschaulicht. Dieses Maschinenkupplungssystem 20 erweist sich als äußerst präzise und gestattet das wiederholgenaue Spannen von Spannstöcken 10 im Bereich von Hundertstel Millimetern bis hin Tausendstel Millimetern.

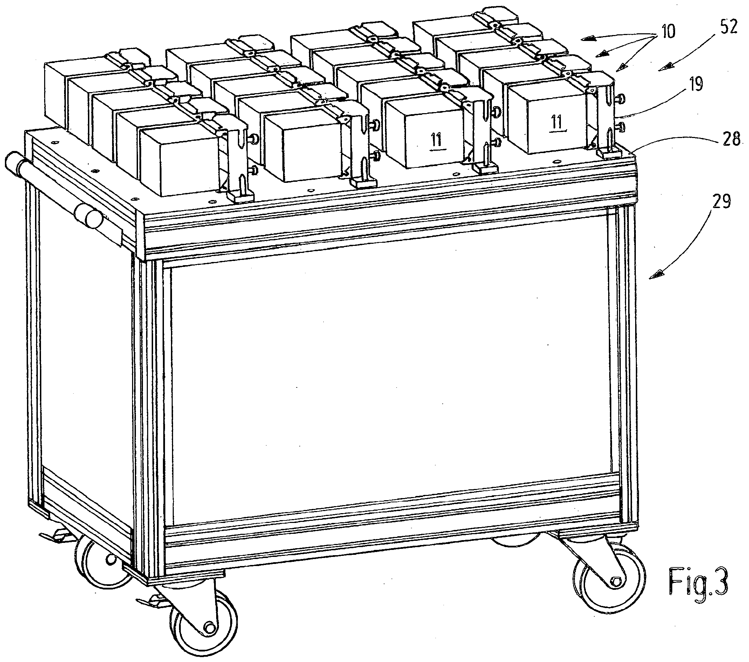

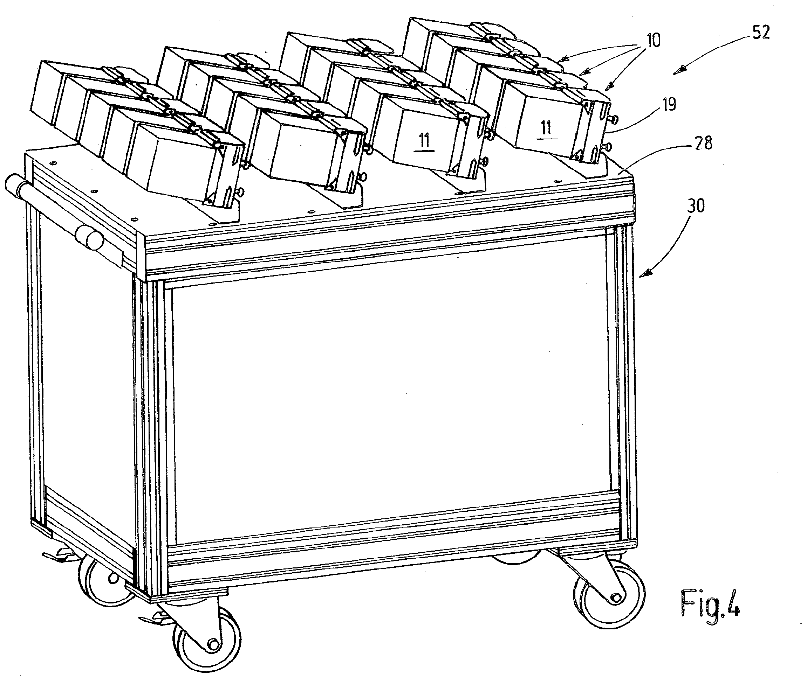

Der Spannstock 10 ist vorzugsweise Teil eines Spannmittelsystems 27, zu dem eine Lagereinrichtung 28 für eine geordnete Aufnahme einer größeren Anzahl von Spannstöcken 10 gehört. Diese sind untereinander gleich ausgebildet und entsprechen der vorigen Beschreibung. Jeder Spannstock 10 kann mit einem Werkstück 11 versehen sein, das zum Beispiel für eine Bearbeitung in einer Bearbeitungsmaschine bereitgehalten wird. Die Spannstöcke 10 sind auf der Lagereinrichtung 28 vorzugsweise in einem rechteckigen Raster angeordnet, wobei die Grundflächen 19 der einzelnen Spannstöcke 10 in einem Winkel, beispielsweise einem rechten Winkel zu einer von der Lagereinrichtung 28 definierten Horizontalfläche angeordnet sind. Figur 3 veranschaulicht dazu einen Transportwagen 29, dessen Lagereinrichtung 28 die Spannstöcke 10 mit senkrecht orientierter Grundfläche 19 hält. Figur 4 veranschaulicht einen alternativen Transportwagen 30, dessen Lagereinrichtung 28 die Spannstöcke 10 mit einer zur vertikalen geneigt orientierten Grundfläche 19 hält. Welche Ausführungsform bevorzugt gegeben wird, hängt zum Beispiel von Größe, Form und Gewicht der in den Spannstöcken 10 gehaltenen Werkstücke 11 ab.

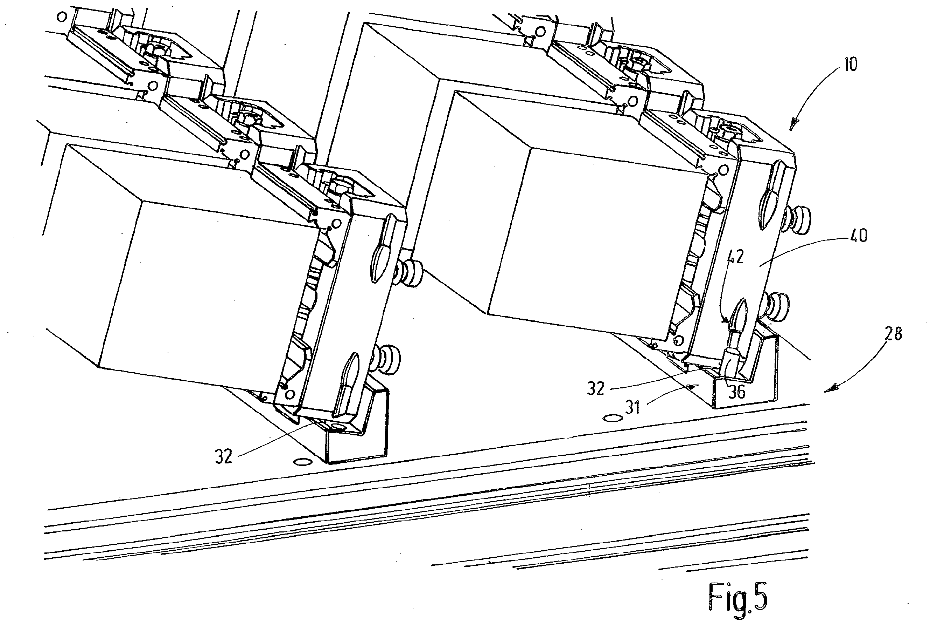

Aus den Figuren 5 und 6 lässt sich der Aufbau der Lagereinrichtung 28 besser ersehen. Zu der Lagereinrichtung 28 gehört eine Lagerkontur 31 zur formschlüssigen Aufnahme des Spannstocks 10. Dazu weist die Lagerkontur 31 beispielsweise eine Auflagefläche 32 und geeignete Lagerelemente 33, 34, zum Beispiel in Gestalt zweier parallel zueinander orientierter, von der Auflagefläche 32 weg ragender Zylinderbolzen 35, 36 oder anderweitiger profilierter Vorsprünge auf. Die in einem Abstand zueinander von der Auflagefläche 32 aufragenden Zylinderbolzen 35, 36 bilden zusammen mit der Auflagefläche 32 die Lagerkontur 31, mit der der Spannstock 10 durch Vertikalbewegung in und außer Eingriff gebracht werden kann. Der Spannstock 10 weist dazu eine passende Lageraufnahmekontur 37 auf, die formschlüssig auf die Lagerkontur 31 passt.

Die Lageraufnahmekontur 37 ist an dem Grundkörper 12 ausgebildet. Sie erstreckt sich, ausgehend von seiner in Lagerstellung unteren Seitenfläche 38, über Abschnitte der beiden Flanken 39, 40 des Grundkörpers 12. Sie ist somit an dem in Lagerposition unteren Ende des Grundkörpers 12 angebracht. Die Lageraufnahmekontur 37 wird im vorliegenden Ausführungsbeispiel durch zwei Nuten 41, 42 gebildet, die sich parallel zueinander erstrecken und beispielsweise einen Trapez- oder Dreieckquerschnitt aufweisen können. Die Größe und Anordnung der Nuten 41, 42 ist dabei so bemessen, dass der Grundkörper 12 mit geringem Spiel an die Lagerkontur 31 anschließbar ist, d.h. zwischen die Zylinderbolzen 35, 36 passt. Die untere Seitenfläche 38 liegt dabei auf der Auflagefläche 32. In dieser Position sind alle Spannstöcke 10 auf dem Transportwagen 29 oder 30 gehalten.

Um die Spannstöcke 10 einzeln oder gruppenweise mit den darauf befindlichen Werkstücken 11 einer Bearbeitung zuführen zu können und um die bearbeiteten Werkstücke 11 mit samt ihren Spannstöcken 10 wieder auf einem Transportwagen 29, 30 ablegen zu können, sind die Spannstöcke 10 an ihrem in Lagerposition oberen Ende mit einer Greiferaufnahmekontur 43 versehen. Zu dieser gehören beispielsweise zwei Greifernuten 44, 45, die sich ausgehend von einer der ersten Seitenfläche 38 gegenüber liegende zweiten Seitenfläche 46 über Teile der beiden Flanken 39, 40 des Grundkörpers 12 erstrecken. Dabei können die Greifernuten 44, 45 mit den zu der Lageraufnahmekontur 37 gehörigen Nuten 41, 42 gleich oder ähnlich aufgebaut sein. Es ist jedoch auch möglich, andere Nutformen zu verwenden, um zu vermeiden, dass Bedienpersonen die Spannstöcke versehentlich mit der Greiferaufnahmekontur 43 auf die Lagerkontur 31 aufsetzen. Vorzugsweise sind die Lagerkontur 31 und die Greiferaufnahmekontur 42 insoweit inkompatibel.

Wesentlich ist für die Greifernuten 44, 45 eine formschlüssige Zuordnung zu einem Greifer 47 mit einer Greiferzange, deren beide Greiferfinger 48, 49 formschlüssig in die Greifernut 44, 45 oder sonstige Greiferausnehmungen passen. Vorzugsweise sind die Greiferfinger 48, 49 und die zugeordnete Komplementärstruktur, die durch die Greifernuten 44, 45 oder Abschnitte derselben gebildet wird, selbstzentrierend ausgebildet, so dass der Greifer 47 den Spannstock 10 mit hoher Genauigkeit greifen kann. Beispielsweise fassen die Finger 48, 49 dabei in die Greifernuten 44, 45, wobei an den Greiferfingern 48, 49 ausgebildete nasenartige Vorsprünge 50, 51 in Vertiefungen der Greifernuten 44, 45 fassen. Dadurch ist der Spannstock 10 sowohl bezüglich der Vertikalposition als auch winkelmäßig fest an den Greifer 47 gekoppelt und kann so von der Lagerkontur 31 abgehoben oder auf diese aufgesetzt werden. Außerdem kann er bei der Überführung von dem Transportwagen 29, 30 zu der Bearbeitungsmaschine und zurück aus seiner Vertikalposition in die Horizontalposition und zurück geschwenkt werden.

Der außermittige Sitz der Spannzange 47 an dem Spannstock 10 hat zur Folge, dass das von dem Schwerpunkt (der Einheit aus Werkstück und Spannstock) auf die Grundfläche 12 gefällte Lot nicht zwischen den Greiferfingern 44, 45 verläuft. D.h. der Spannstock 10 und das darauf befindliche Werkstück 11 erzeugen aufgrund ihres Gewichts und des außermittigen Angriffs der Spannzange 47 ein erhebliches Moment, das von dem Formschluss zwischen den Greiferfingern 48, 49 und den Greifernuten 44, 45 sicher übertragen werden kann. Entsprechendes gilt für das Einsetzen der Positionier- und Spannbolzen 21 - 24 in die Bearbeitungsmaschine und das Herausführen aus dieser.

Das aus einem der Wagen 29, 30 und Spannstöcken 10 bestehende Spannmittelsystem 52 wird wie folgt eingesetzt:

Manuell oder mit einer geeigneten Einrichtung werden zunächst Spannstöcke 10 mit Werkstücken 11 versehen und dann, wie aus Figur 2 bis 4 ersichtlich, auf einer entsprechenden Lagereinrichtung 28 angeordnet. Ist diese auf einen Wagen 29 oder 30 angeordnet, wird sie nun in den Zugangsbereich eines Greifroboters gefahren, womit die Werkstücke 11 zur Bearbeitung bereitgestellt sind. Der Greifer 47 des Greifroboters kann nun bei festgelegter Wagenposition blind, oder bei unbestimmter Wagenposition mittels geeigneter Steuereinrichtungen, beispielsweise kamerageführt, einen Spannstock 10 ergreifen und von der Lagereinrichtung 28 nach oben abziehen. Das Ergreifen des Spannstocks 10 wird besonders erleichtert, wenn die Greifernuten 44, 45 einen Dreieck- oder Trapezquerschnitt aufweisen. Außerdem wird eine korrekte Vertikalpositionierung des Greifers 47 zu dem Spannstock 10 besonders unterstützt, wenn der Greifer 47 zu der Greiferaufnahmekontur 43 selbstzentrierend ausgebildet ist. Dazu können die Vorsprünge 50, 51 konisch, sphärisch gewölbt, kegelförmig, kegelstumpfförmig oder entsprechend anderweitig selbstzentrierend ausgebildet sein.

Nach Ankopplung des Greifers 47 an den Spannstock 10 wird dieser von der Lagereinrichtung 28 abgenommen und der Maschine zugeführt. Dabei werden die Spann- und Positionierbolzen 21 bis 24 in entsprechend Aufnahmeöffnungen an der Maschine eingesetzt und darin festgezogen. Der Spannstock 10 ist dadurch mit höchster Positioniergenauigkeit gehalten. Der Greifer 47 kann nun abkoppeln und aus dem Arbeitsbereich der Werkzeugmaschine entfernt werden.

Nach erfolgter Bearbeitung kann der Greifer 47 den Spannstock 10 wiederum an der Greiferaufnahmekontur 43 fassen und nach Lösen des Maschinenkupplungssystems 20 den Spannstock aus der Werkzeugmaschine herausführen und auf der Lagereinrichtung 28 ablegen. Dies erfolgt indem die Lageraufnahmekontur 37 in die Lagerkontur 31 gefügt wird.

Auf diese Weise können die Werkzeugmaschine und ein Greifroboter die auf dem Wagen 29 oder 30 bereitgestellten Werkstücke bedienerlos eigenständig abarbeiten.

Das insoweit beschriebene Spannmittelsystem 52 lässt sich aus vorhandenen Ressourcen mit geringem Aufwand erstellen. Es sind lediglich entsprechende Wagen 29, 30 mit Lagereinrichtung 28 bereitzustellen. Vorhandene Spannstöcke können nachträglich mit der Lageraufnahmekontur 37 und der Greiferaufnahmekontur 43 versehen werden, beispielsweise indem die entsprechenden Nuten 41, 42 und Greifernuten 44, 45 nach Maßvorgaben des Herstellers der Lagereinrichtung 28 bzw. des Greifers 47 in den Grundkörper 12 eingefräst werden. Die Maßvorgaben können von dem Hersteller der Spannstöcke 10 auch als Datensatz bereitgestellt sein.

Ein erfindungsgemäßes Spannmittelsystem 52 umfasst eine Lagereinrichtung 28 sowie Spannstöcke 10, die in diese Lagereinrichtung 28 passen und die an ihrer Grundfläche jeweils ein Maschinenkupplungssystem 20 und an ihren Seitenflächen 38, 46 sowie Flanken 39, 40 eine Lageraufnahmekontur 37 und eine Greiferaufnahmekontur 43 aufweisen. Die Lageraufnahmekontur 37 ist am meisten spielbehaftet, die Passung zwischen Greifer 47 und Greiferaufnahmekontur 43 ist von mittlerer Präzision (wenige Zehntelmillimeter) während die Präzision des Maschinenkupplungssystems 20 die höchste ist (wenige Hundertstel bis wenige Tausendstel Millimeter Abweichung). Die klare funktionale Trennung zwischen Maschinenkupplungssystem 20 und Lageraufnahmekontur 37 bzw. Greiferaufnahmekontur 43 ermöglicht den Aufbau eines zuverlässigen kostengünstigen Systems. Außerdem ist die Handhabung, insbesondere bei gemischten teilautomatisierten Systemen, bei denen Teile der Handhabungsaufgabe von Bedienpersonen und andere Teile von Greifrobotern ausgeführt werden, auf einfache und intuitive Weise möglich.

### Bezugszeichen:

| | |
|---|---|
| 10 | Spannstock |
| 11 | Werkstück |
| 12 | Grundkörper |
| 13 | erster Spannbacken |
| 14 | zweiter Spannbacken |
| 15 | erste Druckfläche |
| 16 | zweite Druckfläche |
| 17 | erste Auflagefläche |
| 18 | zweite Auflagefläche |
| 19 | Grundfläche |
| 20 | Maschinenkupplungssystem |
| 21 - 24 | Spann- und Positionierbolzen |
| F | Spann kräfte |
| 25, 26 | Bezugsflächen |
| 27 | Spannmittelsystem |
| 28 | Lagereinrichtung |
| 29 | Transportwagen |
| 30 | Transportwagen |
| 31 | Lagerkontur |
| 32 | Auflagefläche |
| 33 | erstes Lagerelement |
| 34 | zweites Lagerelement |
| 35 | erster Zylinderbolzen |
| 36 | zweiter Zylinderbolzen |
| 37 | Lageraufnahmekontur / Spannstockaufnahme |
| 38 | erste Seitenfläche |
| 39 | erste Flanke |
| 40 | zweite Flanke |
| 41 | erste Nut |
| 42 | zweite Nut |
| 43 | Greiferaufnahmekontur |
| 44 | erste Greifernut |
| 45 | zweite Greifernut |
| 46 | zweite Seitenfläche |
| 47 | Greifer |
| 48, 49 | Greiferfinger |
| 50, 51 | Vorsprünge |
| 52 | Spannmittelsystem |
| | |
| | |
| | |
| | |
| | |
| | |
| | |

## Patentansprüche

1. Spannmittelsystem (52)
mit mehreren Spannstöcken (10) für Werkstücke (11), wobei jeder Spannstock (10) aufweist:
eine Grundfläche (19), an der ein Maschinenkupplungssystem (20) angeordnet ist,
wenigstens zwei Werkstückspannbacken (13, 14), die an der der Grundfläche (19) gegenüberliegenden Seite des Spannstocks (10) angeordnet sind und von denen wenigstens eine auf die andere hin und von dieser weg beweglich gelagert ist,
eine Lageraufnahmekontur (37), die außerhalb der Grundfläche (19) an einer ersten Seite des Spannstocks (10) angeordnet ist,
eine Greiferaufnahmekontur (43), die an einer der ersten Seite gegenüberliegenden zweiten Seite des Spannstocks (10) angeordnet ist, und
mit einem Wagen (29, 30), der mehrere auf einer einheitlichen Höhe angeordnete, gleich orientierte Lagerkonturen (31) aufweist, die dazu eingerichtet sind, die Spannstöcke (10) mit nach oben gerichteter Greiferaufnahmekontur (43) und nach unten orientierter Lageraufnahmekontur (37) aufzunehmen.

2. Spannmittelsystem nach Anspruch 1, **dadurch gekennzeichnet, dass** zu der Lageraufnahmekontur (37) zwei Nuten (41, 42) gehören, die sich parallel zueinander entlang zweier voneinander weg weisender Flanken (39, 40) des Spannstocks (10) erstrecken.

3. Spannmittelsystem nach Anspruch 2, **dadurch gekennzeichnet, dass** die Nuten (41, 42) einen Trapezquerschnitt oder einen Dreiecksquerschnitt aufweisen.

4. Spannmittelsystem nach Anspruch 2 oder 3, **dadurch gekennzeichnet, dass** die Nuten (41, 42) entlang ihrer Länge einen sich verändernden Querschnitt aufweisen.

5. Spannmittelsystem nach einem der vorstehenden Ansprüche, **dadurch gekennzeichnet, dass** zu der Greiferaufnahmekontur (43) zwei Greifernuten (44, 45) gehören, die sich parallel zueinander entlang zweier voneinander weg weisender Flanken (39, 40) des Spannstocks (10) erstrecken.

6. Spannmittelsystem nach Anspruch 5, **dadurch gekennzeichnet, dass** die Greifernuten (44, 45) der Greiferaufnahmekontur (43) einen Trapezquerschnitt oder einen Dreiecksquerschnitt aufweisen.

7. Spannmittelsystem nach Anspruch 5 oder 6, **dadurch gekennzeichnet, dass** die Nuten (44, 45) der Greiferaufnahmekontur (43) entlang ihrer Länge einen sich verändernden Querschnitt aufweisen.

8. Spannmittelsytem nach einem der vorstehenden Ansprüche 2 bis 7, **dadurch gekennzeichnet, dass** die Flanken (39, 40) in Nutrichtung gerade Flächen sind.

9. Spannmittelsystem nach einem der vorstehenden Ansprüche, **dadurch gekennzeichnet, dass** beide Werkstückspannbacken (48, 49) durch einen Spannmechanismus gegensinnig zueinander bewegbar sind.

10. Spannmittelsystem nach Anspruch 1, **dadurch gekennzeichnet, dass** die Lagerkonturen (31) nach oben gerichtet und in einem Raster angeordnet sind.

## Claims

1. Clamping means system (52)
with several clamping vices (10) for workpieces (11), wherein each clamping vice (10) has:
▪ a base surface (19) on which a machine coupling system (20) is arranged,
▪ at least two workpiece-clamping jaws (13, 14) which are arranged on the side of the clamping vice (10) opposite the base surface (19) and at least one of which is mounted so as to be movable towards and away from the other,
▪ a bearing-receiving contour (37) which is arranged outside the base surface (19) on a first side of the clamping vice (10),
▪ a gripper-receiving contour (43) which is arranged on a second side of the clamping vice (10) opposite the first side, and
with a carriage (29, 30) having several bearing contours (31) of the same orientation which are arranged at a uniform height and are configured to receive the clamping vices (10) with the gripper-receiving contour (43) pointing upwards and the bearing-receiving contour (37) oriented downwards.

2. Clamping means system according to claim 1, **characterised in that** the bearing-receiving contour (37) has two assigned grooves (41, 42) which extend parallel to each other along two flanks (39, 40) of the clamping vice (10) that point away from each other.

3. Clamping means system according to claim 2, **characterised in that** the grooves (41, 42) have a trapezoid or triangular cross-section.

4. Clamping means system according to claim 2 or 3, **characterised in that** the grooves (41, 42) have a cross-section which changes along its length.

5. Clamping means system according to any of the preceding claims, **characterised in that** the gripper-receiving contour (43) has two assigned gripper grooves (44, 45) which extend parallel to each other along two flanks (39, 40) of the clamping vice (10) that point away from each other.

6. Clamping means system according to claim 5, **characterised in that** the gripper grooves (44, 45) of the gripper-receiving contour (43) have a trapezoid or triangular cross-section.

7. Clamping means system according to claim 5 or 6, **characterised in that** the grooves (44, 45) of the gripper-receiving contour (43) have a cross-section which changes along its length.

8. Clamping means system according to any of the preceding claims 2 to 7, **characterised in that** the flanks (39, 40) are faces which are straight in the groove direction.

9. Clamping means system according to any of the preceding claims, **characterised in that** the two workpiece-clamping jaws (48, 49) can be moved in opposite directions relative to each other by a clamping mechanism.

10. Clamping means system according to claim 1, **characterised in that** the bearing contours (31) point upwards and are arranged in a grid pattern.

## Revendications

1. Système de moyens de serrage (52) comprenant plusieurs blocs de serrage (10) pour des pièces ouvrées (11), chaque bloc de serrage (10) comprenant :
une surface de base (19) sur laquelle est disposé un système d'accouplement de machine (20),
au moins deux mâchoires de serrage de pièce ouvrée (13, 14) qui sont disposées sur le côté du bloc de serrage (10) situé à l'opposé de la surface de base (19) et dont au moins une est montée mobile pour se rapprocher et s'éloigner de l'autre,
un profil de réception de support (37) qui est disposé à l'extérieur de la surface de base (19) sur un premier côté du bloc de serrage (10),
un profil de réception de preneur (43) qui est disposé sur un second côté du bloc de serrage (10) situé à l'opposé du premier côté, et
comprenant un chariot (29, 30) qui comporte plusieurs profils de support (31) disposés à une hauteur uniforme, orientés dans le même sens et agencés pour recevoir les blocs de serrage (10) avec le profil de réception de preneur (43) orienté vers le haut et le profil de réception de rangement (37) orienté vers le bas.

2. Système de moyens de serrage selon la revendication 1, **caractérisé en ce qu'**au profil de réception de support (37) appartiennent deux rainures (41, 42) qui s'étendent parallèlement l'une à l'autre le long de deux flancs (39, 40), orientés à l'opposé l'un de l'autre, du bloc de serrage (10).

3. Système de moyens de serrage selon la revendication 2, **caractérisé en ce que** les rainures (41, 42) présentent une section transversale trapézoïdale ou une section transversale triangulaire.

4. Système de moyens de serrage selon la revendication 2 ou 3, **caractérisé en ce que** les rainures (41, 42) présentent, le long de leur longueur, une section transversale variable.

5. Système de moyens de serrage selon une des revendications précédentes, **caractérisé en ce qu'**au profil de réception de preneur (43) appartiennent deux rainures de preneur (44, 45) qui s'étendent parallèlement l'une à l'autre le long de deux flancs (39, 40), orientés à l'opposé l'un de l'autre, du bloc de serrage (10).

6. Système de moyens de serrage selon la revendication 5, **caractérisé en ce que** les rainures de preneur (44, 45) du profil de réception de preneur (43) présentent une section transversale trapézoïdale ou une section transversale triangulaire.

7. Système de moyens de serrage selon la revendication 5 ou 6, **caractérisé en ce que** les rainures (44, 45) du profil de réception de preneur (43) présentent, le long de leur longueur, une section transversale variable.

8. Système de moyens de serrage selon une des revendications précédentes, 2 à 7, **caractérisé en ce que** les flancs (39, 40) dans la direction des rainures sont des surfaces rectilignes.

9. Système de moyens de serrage selon une des revendications précédentes, **caractérisé en ce que** les deux mâchoires de serrage de pièce ouvrée (48, 49) sont déplaçables en sens contraires l'une par rapport à l'autre au moyen d'un mécanisme de serrage.

10. Système de moyens de serrage selon la revendication 1, **caractérisé en ce que** les profils de support (31) sont orientés vers le haut et disposés dans une trame.
